# EUROPEAN PATENT SPECIFICATION

(11) **EP 1 890 348 B1**
(45) Date of publication and mention of the grant of the patent: **27.10.2010**
(21) Application number: 06756874.1
(22) Date of filing: 01.06.2006
(51) Int. Cl.: H01M 10/05

(54) **ELECTRODE FOR NONAQUEOUS ELECTROLYTE SECONDARY BATTERY, NONAQUEOUS ELECTROLYTE SECONDARY BATTERY, AND AUTOMOBILE, POWER TOOL OR STATIONARY DEVICE EQUIPPED WITH SAME**
ELEKTRODE FÜR EINE SEKUNDÄRBATTERIE MIT WASSERFREIEM ELEKTROLYT, SEKUNDÄRBATTERIE MIT WASSERFREIEM ELEKTROLYT UND DAMIT AUSGESTATTETES AUTOMOBIL, ELEKTROWERKZEUG ODER STATIONÄRE EINRICHTUNG
ELECTRODE POUR ACCUMULATEUR A ELECTROLYTE NON AQUEUX, ACCUMULATEUR A ELECTROLYTE NON AQUEUX, ET AUTOMOBILE, OUTIL ELECTRIQUE OU DISPOSITIF FIXE EN ETANT EQUIPES

(30) Priority: 02.06.2005 JP 2005162253
(43) Date of publication of application: 20.02.2008
(73) Proprietor: Panasonic Corporation, Kadoma-shi Osaka 571-8501 (JP)
(72) Inventor: FUJITA, Hideaki c/o Matsushita Ele. Ind. Co., Ltd., Chuo-ku, Osaka 540-6207 (JP); HATANAKA, Tsuyoshi,c/o Matsushita E. Ind. Co.,Ltd., Chuo-ku, Osaka 540-6207 (JP)
(74) Representative: TBK-Patent
(86) International application number: PCT/JP2006/310993
(87) International publication number: WO 2006/129756

(56) References cited:
- EP-A1- 0 994 073
- DE-A1- 19 935 090
- JP-A- 11 045 706
- JP-A- 2001 222 995
- JP-A- 2001 283 831
- JP-A- 2002 110 254
- JP-A- 2004 273 424

## Description

### Technical Field

The present invention relates to a non-aqueous electrolyte secondary battery suitable for use as a driving power source, for example, for vehicles such as electric automobiles and hybrid automobiles, electric power tools, and stationary equipment, and specifically to the controlling of a pore volume distribution in an electrode for a non-aqueous electrolyte secondary battery.

### Background Art

In recent years, there has been a rapid advancement in reduction in size and weight of electronic equipment. In association with this advancement, with respect to batteries serving as a power source for the equipment, there has been an increasing demand for reduction in size and weight and further improvement in capacity. Currently, non-aqueous electrolyte secondary batteries having high energy densities such as lithium secondary batteries have been commercialized. In the field of automobiles, electric automobiles or hybrid automobiles (automobiles using engines and secondary batteries in combination) have been actively developed.

The secondary batteries to be mounted on electric automobiles and hybrid automobiles are required to have high levels of high-load pulse input/output characteristics. For example, in the case of the hybrid automobiles, the secondary batteries need to power-assist the engine at the time of starting, driving-off, and accelerating the automobiles. Accordingly, they are required to have a performance capable of outputting a large amount of energy for a short period of time from several seconds to approximately 10 seconds. On the other hand, during deceleration of the automobiles, it is necessary to efficiently collect regenerative energy to the secondary batteries.

Electric automobiles and hybrid automobiles are supposed to be used around the world. Since the secondary batteries mounted on vehicles are supposed to be exposed to environmental temperatures widely ranging from a high temperature to a low temperature, the batteries need to exhibit favorable characteristics in a wide temperature zone. A low temperature zone is supposed to include an extremely low temperature environment ranging from -10°C to -30°C. Under such an environment, high levels of input/output characteristics are required.

In order to obtain a secondary battery with high input/output characteristics, it is necessary to reduce the internal resistance of the battery as much as possible. As a solution to this, there have been proposed methods of (i) increasing the area of an electrode plate by making the electrode plate thinner and longer, thereby to enlarge the charge/discharge reaction area and to reduce the battery resistance; (ii) reducing the filling density of an active material in an electrode plate, thereby to increase the porosity of the electrode plate and to improve the charge/discharge reaction; (iii) improving the conductivity of a non-aqueous electrolyte; and the like. However, an attempt to enlarge the area of an electrode plate or increase the porosity of an electrode plate results in a reduction in the energy density of the battery.

In order to increase the energy density of the battery, it is necessary to use an electrode plate filled with an active material at a high density (i.e., a low-porosity electrode plate). However, the use of the low-porosity electrode plate tends to reduce the ion diffusibility in the electrode plate. Consequently, as a result of continuous high-load charge/discharge, a smooth migration of ions is disabled, and the ion concentration in the electrode plate is gradually reduced, making it impossible for the charge/discharge reaction to proceed stably.

Under these circumstances, Patent Document 1 proposes that the porosity of the positive electrode of a non-aqueous electrolyte secondary battery be 25% or less, and moreover the solute concentration of the non-aqueous electrolyte be higher than a concentration providing a conductivity peak. This proposal intends to maintain the ion concentration in the electrode plate and thus improve the charge/discharge reaction, by increasing the solute concentration (i.e., ion concentration) of the non-aqueous electrolyte.
Patent Document 1: Japanese Laid-Open Patent Publication No. 2003-173821

### Disclosure of the Invention

### Problem To be Solved by the Invention

According to the proposal of Patent Document 1, in order to achieve a sufficient high-load charge/discharge characteristics continuously, the solute concentration of the non-aqueous electrolyte needs to be approximately 1.5 mol/dm³ or more. However, if the solute concentration is raised until it exceeds a concentration providing a conductivity peak, the resistance of the non-aqueous electrolyte is increased. Although the increment of the solute concentration is effective for a continuous charge/discharge for a long period of time, in the case of a pulse charge/discharge for a short period of time, the increase in the resistance of the non-aqueous electrolyte will cause voltage drop. As a result, the battery voltage is varied greatly, and thus the pulse output characteristics will be reduced. In addition, in the case of using a non-aqueous electrolyte having a high solute concentration, there is a concern about an increase in the material costs.
The present invention, in view of the above, intends to achieve favorable battery characteristics by controlling the pore volume distribution in an electrode for use in a non-aqueous electrolyte secondary battery.

### Means for Solving the Problem

The present invention relates to a positive electrode for a non-aqueous electrolyte secondary battery including a positive electrode current collector, and a positive electrode material mixture layer carried thereon, wherein the positive electrode material mixture layer includes a positive electrode active material, and the positive electrode active material includes a lithium-containing composite oxide; a peak pore size in the positive electrode material mixture layer is 0.5 µm or less; and a pore volume in the positive electrode material mixture layer is 0.05 cm³/g or more and 0.3 cm³/g or less per unit weight of the positive electrode active material. According to the present invention, the lithium-containing composite oxide is represented by the general formula LiNiₓM₁₋ₓ O₂,where 0<x<1 and M is at least one selected from the group consisting of Co, Mn, Al, Mg and Li.

The present invention also relates to a negative electrode for a non-aqueous electrolyte secondary battery including a negative electrode current collector, and a negative electrode material mixture layer carried thereon, wherein the negative electrode material mixture layer includes a negative electrode active material, and the negative electrode active material includes a carbon material, said carbon material being graphite; a peak pore size in the negative electrode material mixture layer is 0.7 µm or less; and a pore volume in the negative electrode material mixture layer is 0.2 cm³/g or more and 0.4 cm³/g or less per unit weight of the negative electrode active material. It is preferable that the peak pore size in the negative electrode material mixture layer is 0.5 µm or less.

The present invention further relates to a non-aqueous electrolyte secondary battery (Battery A) according to claim 2.

The present invention furthermore relates to a non-aqueous electrolyte secondary battery (Battery B) according to claim 5.

The present invention still further relates to a non-aqueous electrolyte secondary battery (Battery C) including a positive electrode according to claim 1, a negative electrode according to claim 3, and a non-aqueous electrolyte

The present invention further relates to an electric automobile or a hybrid automobile including a vehicle, and Battery A, B or C mounted on the vehicle for driving the vehicle.
The present invention furthermore relates to an electric power tool or stationary equipment such as an elevator including apparatus, and Battery A, B or C for driving the apparatus. The present invention includes a case where Battery A, B or C functions as a backup power source for the stationary equipment.

### Effect of the Invention

In the case where miropores having a pore size of 0.7 µm or less are present evenly in the vicinity of an active material, it is considered that ion supply channels for supplying ions to the vicinity of the active material from the non-aqueous electrolyte in a separator are sufficiently developed. Consequently, a necessary amount of ions for charge/discharge reaction are supplied evenly to the active material, permitting the charge/discharge reaction to proceed favorably.

By controlling a pore volume in the positive electrode material mixture layer to be 0.05 to 0.3 cm³/g per unit weight of the positive electrode active material, a necessary amount of ions for charge/discharge reaction is supplied to the positive electrode active material without shortage. The use of such a positive electrode makes it possible to obtain a non-aqueous electrolyte secondary battery having favorable battery characteristics, and in particular, excellent in pulse output characteristics. Therefore, it is possible to obtain a non-aqueous electrolyte secondary battery suitable for high output applications such as application to hybrid automobiles.

By controlling a pore volume in the negative electrode material mixture layer to be 0.2 to 0.4 cm³/g per unit weight of the negative electrode active material, a necessary amount of ions for charge/discharge reaction is supplied to the negative electrode active material without shortage. The use of such a negative electrode makes it possible to obtain a non-aqueous electrolyte secondary battery having favorable battery characteristics, and in particular, excellent in pulse input characteristics. Therefore, it is possible to obtain a non-aqueous electrolyte secondary battery suitable for high output applications such as application to hybrid automobiles.

### Brief Description of the Drawings

[FIG. 1] A schematic cross sectional view of one example of an electrode of the present invention.
[FIG. 2] A schematic cross sectional view of one example of a conventional electrode.
[FIG. 3] A longitudinal cross sectional view of one example of a cylindrical non-aqueous electrolyte secondary battery.
[FIG. 4] A schematic diagram showing a pattern of charge pulse and discharge pulse applied to a battery in an experiment for obtaining a current-voltage characteristic chart.
[FIG. 5] A schematic chart showing current-voltage characteristics in the charge side.
[FIG. 6] A schematic chart showing current-voltage characteristics in the discharge side.
[FIG. 7] A characteristic chart showing relations between the peak pore size in positive electrodes according to Examples and the output value of batteries at 25°C.
[FIG. 8] A characteristic chart showing relations between the peak pore size in negative electrodes according to Examples and the input value of batteries at 25°C.

### Best Mode for Carrying Out the Invention

Description is made below with reference to the drawings.

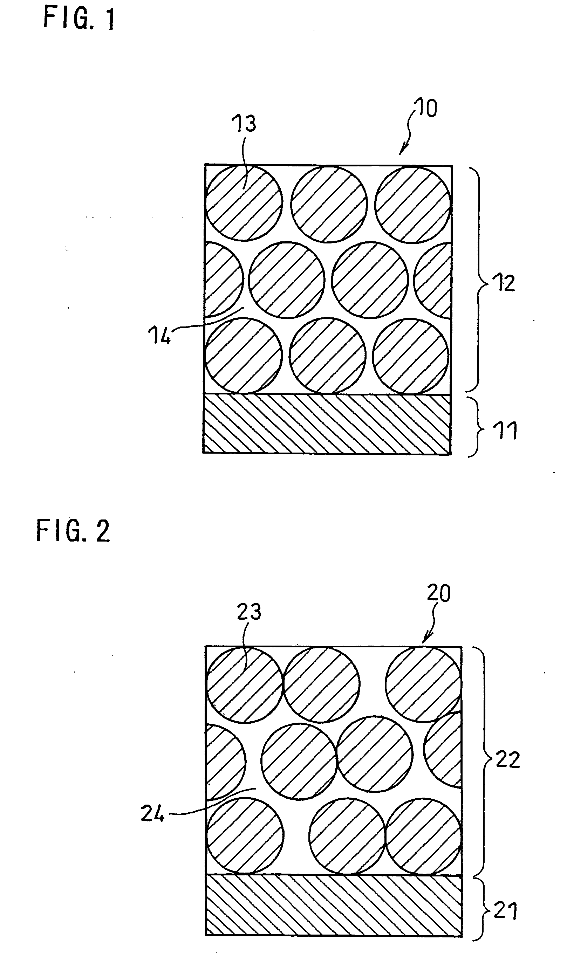

FIG. 1 is a schematic cross sectional view of one example of an electrode of the present invention. An electrode 10 comprises a current collector 11 and an electrode material mixture layer 12 carried thereon. The electrode material mixture layer 12 is filled with active material particles 13 in a certain density. In the vicinity of the active material particles 13, pores (gaps) 14 having a small pore size are present evenly. Such pores 14 serve as good supply channels through which a non-aqueous electrolyte (ions) is supplied to the active material particles 13.

FIG. 2 is a schematic cross sectional view of one example of a conventional electrode. Although an electrode 20 also comprises a current collector 21 and an electrode material mixture layer 22 carried thereon, the electrode material mixture layer 22 is filled with active material particles 23 unevenly. The filling density of the active material particles 23 in the electrode material mixture layer 22 is equal to the filling density of the active material particles 13 in the electrode material mixture layer 12. In other words, the area showing the pores 14 in FIG. 1 is equal to the area showing pores 24 in FIG. 2.

In the case of FIG. 1, the pores 14 are present evenly in the vicinity of the active material particles 13. For this reason, a necessary amount of ions for charge/discharge reaction are supplied to the active material smoothly and evenly, permitting the charge/discharge reaction to proceed favorably. A non-aqueous electrolyte secondary battery employing such an electrode exhibits favorable battery characteristics (high-load pulse output/input characteristics). It should be noted that the amount of non-aqueous electrolyte in the pores varies depending on the size of the pore volume. When the pore volume is small, the amount of non-aqueous electrolyte present in the pores is reduced, and thus the amount of ions that contribute to the charge/discharge reaction is reduced. Further, even when an attempt is made to supply a necessary amount of ions from a separator side adjacent to the electrode, the volume of pores for receiving the necessary amount of ions is deficient. Therefore, it is necessary to ensure a pore volume of a certain level or more.

In view of supplying a necessary amount of ions for charge/discharge reaction smoothly and evenly to the active material, the present invention proposes that in the positive electrode: a peak pore size in the positive electrode material mixture layer be 0.5 µm or less; and a pore volume in the positive electrode material mixture layer be 0.05 to 0.3 cm³/g per unit weight of the positive electrode active material, and preferably 0.05 to 0.25 cm³/g. In the case where the pores in the positive electrode material mixture layer satisfy these conditions, the pores are present evenly in the vicinity of the active material, forming a fine network. As a result, a necessary amount of ions for charge/discharge reaction are supplied smoothly through the pores to the active material, and thus favorable high-load pulse output characteristics can be obtained.

If the peak pore size in the positive electrode material mixture layer exceeds 0.7 µm, the pores are present unevenly, and consequently favorable high-load pulse output characteristics cannot be obtained. If the pore volume in the positive electrode material mixture layer is less than 0.05 cm³/g per unit weight of the positive electrode active material, the pore volume is too small, and consequently a necessary amount of ions for charge/discharge reaction will not be sufficiently supplied to the active material. On the other hand, if the pore volume in the positive electrode material mixture layer exceeds 0.3 cm³/g per unit weight of the positive electrode active material, it will be impossible to obtain a high capacity, resulting in a reduction in the utility.

Further, in view of supplying a necessary amount of ions for charge/discharge reaction smoothly and evenly to the active material, the present invention proposes that in the negative electrode: a peak pore size in the negative electrode material mixture layer be 0.7 µm or less, and preferably 0.5 µm or less; and a pore volume in the negative electrode material mixture layer be 0.2 cm³/g or more to 0.4 cm³/g or less per unit weight of the negative electrode active material. In the case where the pores in the negative electrode material mixture layer satisfy these conditions, the pores are present evenly in the vicinity of the active material, forming a fine network. As a result, a necessary amount of ions for charge/discharge reaction are supplied smoothly through the pores to the active material, and thus favorable high-load pulse input characteristics can be obtained.

If the peak pore size in the negative electrode material mixture layer exceeds 0.7 µm, favorable high-load pulse input characteristics cannot be obtained. If the pore volume in the negative electrode material mixture layer is less than 0.2 cm³/g per unit weight of the negative electrode active material, the pore volume is too small, and consequently a necessary amount of ions for charge/discharge reaction will not supplied sufficiently to the active material. On the other hand, if the pore volume in the negative electrode material mixture layer exceeds 0.4 cm³/g per unit weight of the negative electrode active material, it will be impossible to obtain a high capacity, resulting in a reduction in the utility.

The term "peak pore size" means a pore size at which a log differential pore volume distribution (a graph showing a relation between the log differential pore volume and a pore size) shows a peak. The term "pore volume per unit weight of the active material in an electrode material mixture layer" refers to a value determined by dividing a cumulative pore volume measured with respect to a sample of an electrode material mixture having a predetermined weight by a weight of the active material included in the sample. The log differential pore volume distribution refers to a graph obtained by plotting values determined by dividing a pore volume difference dV by a logarithmic difference value in pore size D, d(log D), with respect to an average pore size in each interval.

In order to determine a "peak pore size" and a "pore volume per unit weight of the active material in an electrode material mixture layer", it is necessary to exclude the distribution of pores having a pore size exceeding 5 µm from the log differential pore volume distribution and a cumulative pore volume distribution (a graph showing a relation between the cumulative pore volume and the pore size). This is because the pores having a pore size exceeding 5 µm at times may include gaps between samples when a plurality of samples are used to measure a pore volume distribution or gaps between a sample container and the sample. In the embodiment of the present invention, the possibility is extremely small in which pores having a pore size exceeding 5 µm are present in the electrode material mixture layer.

Although no particular limitation is imposed on the method for controlling the peak pore size, the peak pore size can be controlled, for example, by the methods of: i) varying the degree of stirring of the electrode material mixture to control the dispersing degree of the active material in the electrode material mixture; ii) mixing a plurality of active materials having different particle size distributions to prepare an electrode material mixture; iii) mixing a controlling material for a pore size (a subliming agent etc.) into the electrode material mixture and then removing the controlling material from the electrode material mixture layer by heating etc.; (iv) mixing a material soluble to non-aqueous electrolyte into the electrode material mixture and controlling the particle size distribution of the material; (v) applying a conductive agent to the vicinity of the active material beforehand, the applied amount of which is controlled in order to control the dispersibility of the material mixture; and the like.
Although no particular limitation is imposed on the method for controlling the pore volume per unit weight of the active material in the electrode material mixture layer, it can be controlled by, in addition to the pore size control as described above, for example, rolling the electrode material mixture layer, by which the filling density of the active material in the electrode material mixture layer can also be controlled.

The positive electrode material mixture may include various desired components as well as the positive electrode active material as an essential component. Examples of the desired components include a conductive agent, a binder, and a thickener. A positive electrode material mixture paste is obtained by mixing the positive electrode material mixture with a liquid component (N-methyl-2-pyrrolidone, water, etc.) and then kneading. In this process, as needed, the degree of stirring of the positive electrode material mixture paste is controlled, a plurality of active materials having different particle size distributions are mixed with the positive electrode material mixture, or a subliming agent or a material soluble to non-aqueous electrolyte is mixed with the positive electrode material mixture paste.

The positive electrode material mixture paste is applied on both faces of a positive electrode current collector (e.g., aluminum foil), dried and then rolled as needed, whereby a positive electrode material mixture layer having a predetermined thickness is formed. In this process, in view of securing a certain amount of pore volume, the filling density of the positive electrode active material in the positive electrode material mixture layer of 2 to 3.5 g/cm³ is preferred. Thereafter, the current collector is cut (slit) as needed, whereby a sheet-like positive electrode having predetermined dimensions is obtained.

The positive electrode active material includes a lithium-containing composite oxide capable of absorbing and desorbing lithium. As the lithium-containing composite oxide, a Li Mn₂O₄ material obtained by partly replacing Co, Ni or Mn of a lithium cobalt oxide (LiCoO₂), a lithium nickel oxide (LiNiO₂), or a lithium manganese oxide with another element (e.g., Co, Ni, Mn, Al, Mg, Li, etc.) is also preferably used. According to the present invention a lithium-containing composite oxide as defined in claim 1 is used. The positive electrode active material may be used singly or in combination of two or more. In particular, a lithium-containing composite oxide having a mean particle size (a volume basis median diameter (D₅₀) as determined using a laser-diffraction particle size distribution analyzer) of 2 to 20 µm, and a BET specific surface area (a specific surface area by a BET method) of 0.2 to 1.5 m²/ g, and represented by the general formula LiNiₓM₁₋ₓO₂ (where 0 < x < 1, and preferably 0.5 ≦ x ≦ 0.85; M is at least one selected from the group consisting of Co, Mn, Al, Mg and Li) is preferred. With such a positive electrode active material, it is easy to control the peak pore size in the positive electrode material mixture layer to be 0.7 µm or less, and the pore volume per unit weight of the positive electrode active material in the positive electrode material mixture layer to be 0.05 to 0.3 cm³/g, and the present invention can exert a great effect.

The conductive agent is effective in enhancing the electric conductivity of the positive electrode and promoting the charge/discharge reaction efficiently. For the conductive agent that may be included in the positive electrode, a carbon material such as carbon black (e.g., acetylene black (AB) or Ketjen Black (KB)) and graphite may be used. The conductive agent may be used singly or in combination of two ore more. The amount of the conductive agent to be included in the positive electrode material mixture is preferably 1 to 10 parts by weight per 100 parts by weight of the positive electrode active material.

The binder has a function to bond the active material particles together and bond the positive electrode material mixture layer and the positive electrode current collector. For the binder that may be included in the positive electrode, for example, polytetrafluoroethylene (PTFE), polyvinylidene fluoride (PVDF), and the like may be used. The binder may be used singly or in combination of two or more. The amount of the binder to be included in the positive electrode material mixture is preferably 1 to 10 parts by weight per 100 parts by weight of the positive electrode active material.

The thickener mainly serves to adjust the viscosity of the positive electrode material mixture paste. For the thickener, in the case where water is used as a liquid component to be mixed with the positive electrode material mixture, a water-soluble polymer such as carboxymethyl cellulose (CMC) may be used. The amount of the thickener to be included in the positive electrode material mixture is preferably 0.2 to 2 parts by weight per 100 parts by weight of the positive electrode active material.

The negative electrode material mixture may include various desired components as well as the negative electrode active material as an essential component. Examples of the desired components include a conductive agent, a binder, and a thickener. A negative electrode material mixture paste is obtained by mixing the negative electrode material mixture with a liquid component (N-methyl-2-pyrrolidone, water, etc.) and then kneading. In this process, as needed, the degree of stirring of the negative electrode material mixture paste is controlled, a plurality of active materials having different particle size distributions are mixed with the negative electrode material mixture, or a subliming agent or a material soluble to non-aqueous electrolyte is mixed with the negative electrode material mixture paste.

The negative electrode material mixture paste is applied on both faces of a negative electrode current collector (e.g., copper foil, copper alloy foil, etc.), dried and then rolled as needed, whereby a negative electrode material mixture layer having a predetermined thickness is formed. In this process, in view of securing a certain amount of pore volume, the filling density of the negative electrode active material in the negative electrode material mixture layer of 1 to 1.5 g/cm³ is preferred. Thereafter, the current collector is cut (slit) as needed, whereby a sheet-like negative electrode having predetermined dimensions is obtained.

The negative electrode active material includes a carbon material capable of absorbing and desorbing lithium. The carbon material, although not particularly limited, is exemplified by, for example, graphite (natural graphite, artificial graphite, etc.), coke, and the like. In particular, graphite having a mean particle size (a volume basis median diameter (D₅₀) as determined using a laser-diffraction particle size distribution analyzer) of 2 to 20 µm, and a BET specific surface area of 2 to 6 m²/g is preferably used. With such a negative electrode active material, it is easy to control the peak pore size in the negative electrode material mixture layer to be 0.7 µm or less, and the pore volume per unit weight of the negative electrode active material in the negative electrode material mixture layer to be 0.2 to 0.4 cm³/g, and the present invention can exert a great effect.

In view of controlling the pore volume distribution as described above, it is preferable to use in combination graphite (graphite X) having a mean particle size of 10 to 30 µm and a BET specific surface area of 0.5 to 6 m²/g with graphite (graphite Y) having a mean particle size of 2 to 8 µm and a BET specific surface area of 2 to 20 m²/g. The weight ratio between graphite X and graphite Y is preferably in the range of X:Y = 100:0 to X:Y = 50:50.

For the binder in the negative electrode, for example, styrene-butadiene rubber (SBR), polyvinylidene fluoride (PVDF), and the like may be used. The binder may be used singly or in combination of two or more. The amount of the binder to be included in the negative electrode material mixture is preferably 1 to 10 parts by weight per 100 parts by weight of the negative electrode active material.

For the thickener in the negative electrode, a water-soluble polymer such as carboxymethyl cellulose (CMC) may also be used. The amount of the thickener to be included in the negative electrode material mixture is preferably 0.2 to 2 parts by weight per 100 parts by weight of the negative electrode active material.

The non-aqueous electrolyte secondary battery of the present invention includes the foregoing positive electrode, or the foregoing negative electrode, or both. A separator is generally interposed between the positive electrode and the negative electrode. The separator has a function to provide insulation between the positive electrode and the negative electrode, as well as to retain the non-aqueous electrolyte. For the separator, a microporous film made of polyolefin resin is preferably used. For example, a microporous polyethylene (PE) film, a microporous polypropylene (PP) film, a layered film composed of a microporous PE film and a microporous PP film, and the like are used.

The non-aqueous electrolyte includes a non-aqueous solvent with a lithium salt dissolved therein. The concentration of the lithium salt in the non-aqueous electrolyte of 0.5 to 2 mol/dm³ is preferred.

For the non-aqueous solvent, for example, cyclic carbonic acid esters such as ethylene carbonate (EC), propylene carbonate (PC), chain carbonic acid esters such as diethyl carbonate (DEC), dimethyl carbonate (DMC), ethyl methyl carbonate (EMC), and the like are preferably used. The non-aqueous solvent, although may be used singly, is preferably used in combination of two or more. It is preferable that 0 to 50 wt% of the whole non-aqueous solvent is composed of cyclic carbonic acid esters and 50 to 90 wt% is composed of chain carbonic acid esters.

For the lithium salt, lithium hexafluorophosphate (LiPF₆), lithium tetrafluoroborate (LiBF₄), and the like are preferably used. The lithium salt may be used singly or in combination of two or more.

The shape of a non-aqueous electrolyte secondary battery for which the present invention is applicable is not particularly limited and the battery may be of any shape, for example, a cylindrical shape, a prismatic shape, a stacked shape and the like. A finished battery is obtained by fabricating an electrode assembly including the positive electrode and the negative electrode with the separator interposed therebetween, housing the electrode assembly in a battery case, injecting the non-aqueous electrolyte in the battery case, and then sealing the battery case.

The present invention is described below in detail with reference to Examples. Here, Examples 1 to 21 and Reference Examples 1 to 11 are Examples and Reference Examples relating to the invention of a positive electrode. Examples 22 to 24 and Reference Examples 12 to 17 are Examples and Reference Examples relating to the invention of a negative electrode. Including a negative electrode according to the present invention, the batteries of Reference Examples 1 to 11 relating to the invention of a positive electrode correspond to Examples of the invention of a non-aqueous electrolyte secondary battery. Including a positive electrode according to the present invention, the batteries of Reference Examples 12 to 17 relating to the invention of a negative electrode correspond to Examples of the invention of a non-aqueous electrolyte secondary battery.

It is to be noted that the Examples 1, 2, 6, 7, 11, 12, 16 and 17 are to be considered as being Reference Examples relating to the invention of a positive electrode.

### Example 1

In this Example, a 17500-type cylindrical lithium ion secondary battery was produced.

### [1] Fabrication of Positive Electrode

### (i) Preparation of Positive Electrode Active Material

A lithium nickel composite oxide represented by the compositional formula LiNi_{0.7}Co₀.₂Al_{0.1}O₂ was prepared as the positive electrode active material. A predetermined amount of cobalt sulfate and aluminum sulfate were added to a NiSO₄ aqueous solution, to prepare a saturated aqueous solution. While this saturated aqueous solution was stirred, an alkaline aqueous solution with sodium hydroxide dissolved therein was slowly dropped. As a result of such a coprecipitation method, a precipitate of ternary nickel hydroxide (Ni_{0.7}Co_{0.2}Al_{0.1}(OH)₂) was formed. The precipitate thus formed was filtered, washed with water and then dried at 80°C. The mean particle size of Ni_{0.7}Co_{0.2}Al_{0.1}(OH)₂ was 10 µm.

The Ni_{0.7}Co_{0.2}Al_{0.1}(OH)₂ thus obtained was heated in air at 900° C for 10 hours, to give a nickel oxide Ni_{0.7}Co_{0.2}Al_{0.1}O). As a result of analysis by powder X-ray diffractometry of the Ni_{0.7}Co_{0.2}Al_{0.1}O thus obtained, it was confirmed that the Ni_{0.7}Co_{0.2}Al_{0.1}O was a single-phase nickel oxide.

Lithium hydroxide monohydrate was added to Ni_{0.7}Co_{0.2}Al_{0.1}O such that the sum of the number of atoms of Ni, Co and Al became equal to the number of atoms of Li and then mixed. The mixture thus obtained was heated in dry air at 800° C for 10 hours, to give an intended Ni_{0.7}Co_{0.2}Al_{0.1}O₂. As a result of analysis by powder X-ray diffractometry of the lithium nickel composite oxide thus obtained, it was confirmed that the lithium nickel composite oxide has a single-phase layered hexagonal crystal structure. In addition, it was confirmed that Co and Al were captured in the crystal structure of LiNiO₂ and the lithium nickel composite oxide formed a solid solution. The lithium nickel composite oxide was crushed and classified, thereby to yield a positive electrode active material having a mean particle size (D₅₀) of 9.5 µm, and a BET specific surface area of 0.5 m²/g.

### (ii) Preparation of Positive Electrode Material Mixture Paste

90 parts by weight of the positive electrode active material, 5 parts by weight of acetylene black serving as a conductive agent, 5 parts by weight of polyvinylidene fluoride (PVDF) serving as a binder (42 parts by weight of "KF polymer #1320 (trade name)", which is an NMP solution of PVDF, available from Kureha Chemical Industry Co., Ltd.), and an appropriate amount of N-methyl-2-pyrrolidone (NMP) were mixed and then kneaded for 60 minutes with a kneading unit, thereby to prepare a positive electrode material mixture paste having a solid content of 50 wt%. In this process, preliminary mixing was carried out first, in which powdery materials were mixed, and then the whole amount of NMP solution of PVDF and the whole amount of NMP were added to the resultant powdery mixture. For the kneading unit, a planetary mixer available from Tokushu Kika Kogyo Co., Ltd. was used. The revolution speed of the planetary mixer was set to 50 rpm. The dispersing degree of the positive electrode material mixture varies depending on the kneading time. It is considered that the longer the kneading time is, the more the dispersing degree of the positive electrode material mixture is improved.

### (iii) Fabrication of Positive Electrode

For the positive electrode current collector, an alloy 1N30 (temper grade: H18, thickness: 20µm) was used. The alloy 1N30 contains 99.3 wt% of Al and the remaining is composed of Si, Fe, Cu, Mn, Mg and Zn. The positive electrode active material paste was applied to both faces of the positive electrode current collector, and then dried. Thereafter, the positive electrode material mixture was rolled such that the material mixture density in the positive electrode became 2.8 g/cm³, whereby a positive electrode material mixture layer having a thickness of 30 µm was formed on both faces of the positive electrode current collector. Subsequently, the positive electrode current collector was slit, to yield a positive electrode having a thickness of 80 µm, a width of 37 mm, and a length of 450 mm.

### [2] Fabrication of Negative Electrode

### (i) Preparation of Negative Electrode Active Material

For the negative electrode active material, artificial graphite having a mean particle size (D₅₀) of 10 µm, and a BET specific surface area of 4.8 m²/g was used.

### (ii) Preparation of Negative Electrode Material Mixture Paste

96 parts by weight of the negative electrode active material, 3 parts by weight of SBR serving a binder (7.5 parts by weight of "BM 400B (trade name)", which is an aqueous dispersion of SBR, available from Nippon Zeon Co., Ltd.), 1 part by weight of CMC serving as a thickener, and an appropriate amount of water were mixed and then kneaded for 90 minutes with a kneading unit, thereby to prepare a negative electrode material mixture paste having a solid content of 40 wt%. In this process, dry mixing of graphite and CMC powders was carried out first, and then the whole amount of aqueous dispersion of SBR and the whole amount of water were added to the resultant powdery mixture. For the kneading unit, a planetary mixer available from Tokushu Kika Kogyo Co., Ltd. as used in the fabrication of a positive electrode was used. The revolution speed of the planetary mixer was set to 50 rpm.

### (iii) Fabrication of Negative Electrode

For the negative electrode current collector, a copper foil (thickness: 10 µm) was used. The negative electrode active material paste was applied to both faces of the negative electrode current collector, and then dried. Thereafter, the negative electrode material mixture was rolled such that the density of the negative electrode material mixture became 1.2 g/cm³, whereby a negative electrode material mixture layer having a thickness of 30.5 µm was formed on both faces of the negative electrode current collector. Subsequently, the negative electrode current collector was slit, to yield a negative electrode having a thickness of 81 µm, a width of 39 mm, and a length of 470 mm.

### [3] Preparation of Non-aqueous Electrolyte

To a non-aqueous solvent mixture of ethylene carbonate (EC) and ethyl methyl carbonate (EMC) in a volume ratio of 1:3, LiPF₆ serving as a lithium salt was dissolved in a concentration of 1.0 mol/dm³, thereby to give a non-aqueous electrolyte.

### [4] Fabrication of Battery

After a lead made of aluminum was welded to the positive electrode current collector, the positive electrode was introduced into a drying oven and dried in dry atmosphere at 100°C for 10 hours for the purpose of removing the residual moisture. To the negative electrode current collector, a lead made of nickel was welded. Thereafter, the negative electrode was introduced into a drying oven and dried in dry atmosphere at 80°C for 10 hours for the purpose of removing the residual moisture.

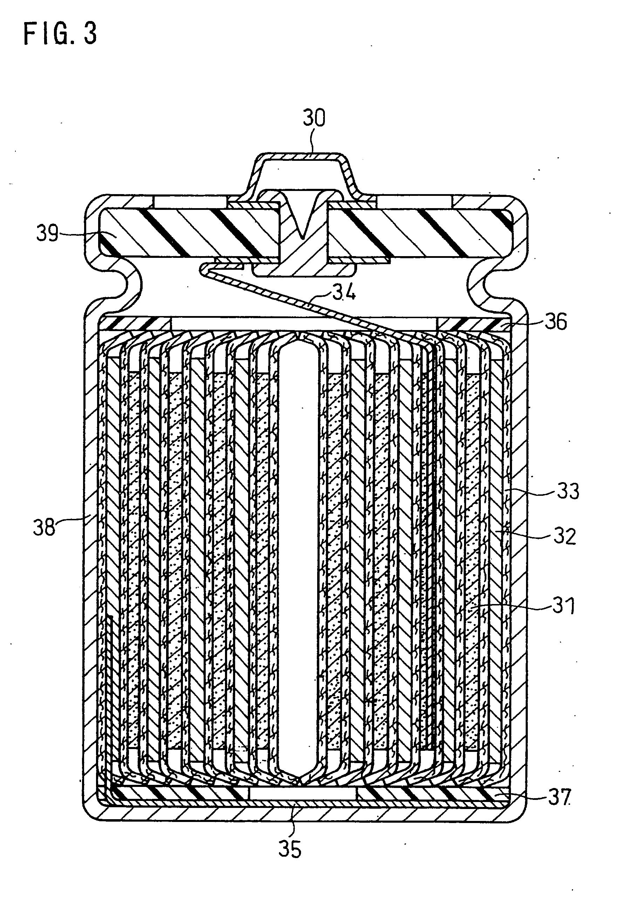

A cylindrical battery having a structure as shown in FIG. 3 was assembled in the following manner.
A positive electrode 31 and a negative electrode 32 after drying were wound with a separator 33 made of a polyethylene microporous film having a thickness of 25 µm interposed therebetween, thereby to fabricate an electrode assembly. An upper insulating plate 36 and a lower insulating plate 37 were placed on the upper face and the lower face of the electrode assembly, respectively. The electrode assembly was then inserted into a battery case 38 made of iron whose surface was nickel plated. A negative electrode lead 35 was resistance welded to the inner bottom of the battery case 38. A positive electrode lead 34 was laser welded to the back face of a sealing plate 39, to electrically connect a positive electrode terminal 30 and the positive electrode lead 34. After a non-aqueous electrolyte was injected into the battery case 38, the opening of the battery case 38 was sealed with the sealing plate 39, whereby a finished battery was obtained.

### Example 2

A battery was fabricated in the same manner as in Example 1 except that, in the process of preparation of a positive electrode material mixture paste, the paste kneading time with a planetary mixer was set to 90 minutes.

### Example 3

A battery was fabricated in the same manner as in Example 1 except that, in the process of preparation of a positive electrode material mixture paste, the paste kneading time with a planetary mixer was set to 120 minutes.

### Example 4

A battery was fabricated in the same manner as in Example 1 except that, in the process of preparation of a positive electrode material mixture paste, the paste kneading time with a planetary mixer was set to 150 minutes.

### Example 5

A battery was fabricated in the same manner as in Example 1 except that, in the process of preparation of a positive electrode material mixture paste, the paste kneading time with a planetary mixer was set to 180 minutes.

«Reference Example 1»
A battery was fabricated in the same manner as in Example 1 except that, in the process of preparation of a positive electrode material mixture paste, the paste kneading time with a planetary mixer was set to 30 minutes.

### «Reference Example 2»

A battery was fabricated in the same manner as in Example 3 except that the positive electrode material mixture was rolled such that the density of the positive electrode material mixture became 3.5 g/cm³, whereby a positive electrode material mixture layer having a thickness of 24 µm was formed on both faces of the positive electrode current collector.

### «Reference Example 3»

A battery was fabricated in the same manner as in Reference Example 2 except that, in the process of preparation of a positive electrode material mixture paste, the paste kneading time with a planetary mixer was set to 150 minutes.

### «Reference Example 4»

A battery was fabricated in the same manner as in Reference Example 2 except that, in the process of preparation of a positive electrode material mixture paste, the paste kneading time with a planetary mixer was set to 180 minutes.

### «Reference Example 5»

A battery was fabricated in the same manner as in Example 3 except that the positive electrode material mixture was rolled such that the density of the positive electrode material mixture became 3.4 g/cm³, whereby a positive electrode material mixture layer having a thickness of 25 µm was formed on both faces of the positive electrode current collector.

### «Reference Example 6»

A battery was fabricated in the same manner as in Reference Example 5 except that, in the process of preparation of a positive electrode material mixture paste, the paste kneading time with a planetary mixer was set to 150 minutes.

### «Reference Example 7»

A battery was fabricated in the same manner as in Reference Example 5 except that, in the process of preparation of a positive electrode material mixture paste, the paste kneading time with a planetary mixer was set to 180 minutes.

### Example 6

A battery was fabricated in the same manner as in Example 1 except that the positive electrode material mixture was rolled such that the density of the positive electrode material mixture became 3.3 g/cm³, whereby a positive electrode material mixture layer having a thickness of 25.5 µm was formed on both faces of the positive electrode current collector.

### Example 7

A battery was fabricated in the same manner as in Example 6 except that, in the process of preparation of a positive electrode material mixture paste, the paste kneading time with a planetary mixer was set to 90 minutes.

### Example 8

A battery was fabricated in the same manner as in Example 6 except that, in the process of preparation of a positive electrode material mixture paste, the paste kneading time with a planetary mixer was set to 120 minutes.

### Example 9

A battery was fabricated in the same manner as in Example 6 except that, in the process of preparation of a positive electrode material mixture paste, the paste kneading time with a planetary mixer was set to 150 minutes.

### Example 10

A battery was fabricated in the same manner as in Example 6 except that, in the process of preparation of a positive electrode material mixture paste, the paste kneading time with a planetary mixer was set to 180 minutes.

### «Reference Example 8»

A battery was fabricated in the same manner as in Example 6 except that, in the process of preparation of a positive electrode material mixture paste, the paste kneading time with a planetary mixer was set to 30 minutes.

### Example 11

A battery was fabricated in the same manner as in Example 1 except that the positive electrode material mixture was rolled such that the density of the positive electrode material mixture became 3.0 g/cm³, whereby a positive electrode material mixture layer having a thickness of 28 µm was formed on both faces of the positive electrode current collector.

### Example 12

A battery was fabricated in the same manner as in Example 11 except that, in the process of preparation of a positive electrode material mixture paste, the paste kneading time with a planetary mixer was set to 90 minutes.

### Example 13

A battery was fabricated in the same manner as in Example 11 except that, in the process of preparation of a positive electrode material mixture paste, the paste kneading time with a planetary mixer was set to 120 minutes.

### Example 14

A battery was fabricated in the same manner as in Example 11 except that, in the process of preparation of a positive electrode material mixture paste, the paste kneading time with a planetary mixer was set to 150 minutes.

### Example 15

A battery was fabricated in the same manner as in Example 11 except that, in the process of preparation of a positive electrode material mixture paste, the paste kneading time with a planetary mixer was set to 180 minutes.

### «Reference Example 9»

A battery was fabricated in the same manner as in Example 11 except that, in the process of preparation of a positive electrode material mixture paste, the paste kneading time with a planetary mixer was set to 30 minutes.

### «Reference Example 10»

A battery was fabricated in the same manner as in Example 1 except that the positive electrode material mixture was rolled such that the density of the positive electrode material mixture became 2.0 g/cm³, whereby a positive electrode material mixture layer having a thickness of 35.5 µm was formed on both faces of the positive electrode current collector.

### Example 16

A battery was fabricated in the same manner as in Reference Example 10 except that, in the process of preparation of a positive electrode material mixture paste, the paste kneading time with a planetary mixer was set to 90 minutes.

### Example 17

A battery was fabricated in the same manner as in Reference Example 10 except that, in the process of preparation of a positive electrode material mixture paste, the paste kneading time with a planetary mixer was set to 120 minutes.

### Example 18

A battery was fabricated in the same manner as in Reference Example 10 except that, in the process of preparation of a positive electrode material mixture paste, the paste kneading time with a planetary mixer was set to 150 minutes.

### Example 19

A battery was fabricated in the same manner as in Reference Example 10 except that, in the process of preparation of a positive electrode material mixture paste, the paste kneading time with a planetary mixer was set to 180 minutes.

### «Reference Example 11»

A battery was fabricated in the same manner as in Reference Example 10 except that, in the process of preparation of a positive electrode material mixture paste, the paste kneading time with a planetary mixer was set to 30 minutes.

### Example 20

A battery was fabricated in the same manner as in Example 1 except that, for the positive electrode active material, a mixture obtained by mixing positive electrode active material A (LiNi₀₋₇Co_{0.2}Al₀.₁O₂) having a mean particle size (D₅₀) of 15 µm and a BET specific surface area of 0.3 m²/g, and positive electrode active material B (LiNi_{0.7}Co_{0.2}Al_{0.1}O₂) having a mean particle size (D₅₀) of 5 µm and a BET specific surface area of 0.95 m²/g in a weight ratio of (positive electrode active material A):(positive electrode active material B) = 75:25 was used

The positive electrode active material A and the positive electrode active material B were prepared in the same procedure as the positive electrode active material (LiNi_{0.7}Co_{0.2}Al_{0.1}O₂) of Example 1 except that, in the process of forming nickel hydroxide by means of a coprecipitation method, the stirring condition and temperature of the saturated aqueous solution were changed, so that the mean particle size and the BET specific surface area of the positive electrode active material A and the positive electrode active material B were controlled as described above.

### Example 21

A battery was fabricated in the same manner as in Example 20 except that, for the positive electrode active material, a mixture obtained by mixing in a weight ratio of (positive electrode active material A):(positive electrode active material B) = 40:60 was used.

### [Evaluation]

### (Measurement of Pore Volume Distribution)

With respect to the positive electrodes of Examples and Reference Examples, the pore volume distribution in the positive electrode material mixture layer was measured using a mercury porosimeter. For the porosimeter, "Autopore III 9410" available from Shimadzu Corporation was used. In this measurement, a cumulative pore volume distribution and a log differential pore volume distribution were determined.

### <Peak pore size>

The distribution of pores having a pore size of 5 µm or less was extracted (the distribution of pores having a pore size exceeding 5 µm was excluded) from the log differential pore volume distribution, to calculate a peak pore size.

### <Pore volume per unit weight of positive electrode active material>

The distribution of pores having a pore size of 5 µm or less was extracted (the distribution of pores having a pore size exceeding 5 µm was excluded) from the cumulative pore volume distribution, and then the cumulative pore volume was divided by a weight of the positive electrode active material included in a sample, to calculate a pore volume per unit weight of the positive electrode active material.

### (Battery capacity)

The batteries of Examples and Reference Examples were subjected to charge and discharge in a 25°C environment at a constant current of 70 mA, under the conditions of a charge cut-off voltage of 4.2 V and a discharge cut-off voltage of 3.0 V, to check the battery capacity. The results found that the battery capacities in Examples and Reference Examples were approximately 350 mAh.

### (Input/output characteristics of Battery)

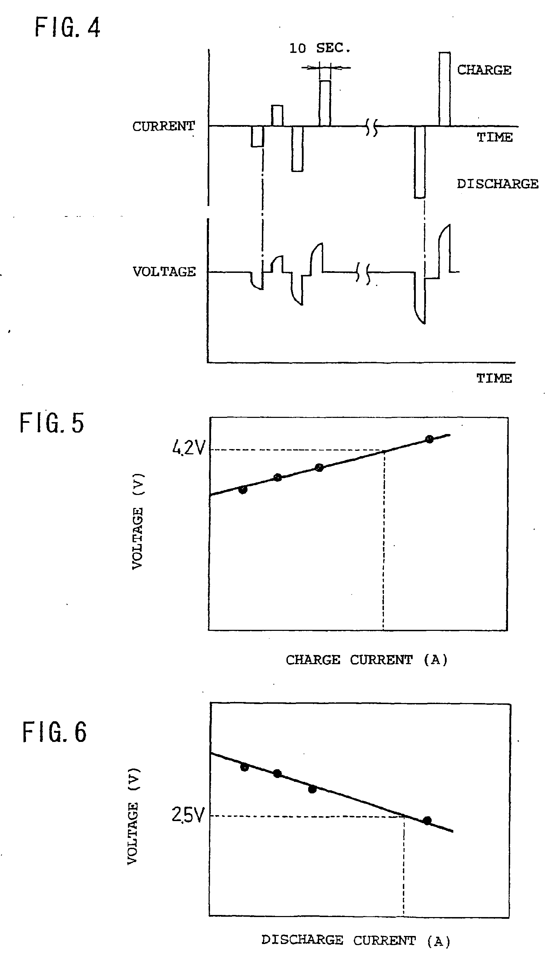

With respect to the batteries of Examples and Reference Examples, the input/output characteristics were evaluated in the following procedure. The batteries were charged at a constant current under an environment of 25°C until a 60% charged state was reached, and then allowed to stand for one hour under an environment of 25°C. Thereafter, constant current charge pulse and discharge pulse of 10 second duration were alternately applied to the batteries with a one minute interval in a pattern as shown in FIG. 4. In this process, the current value was increased step by step in the range of 0.35 to 20 A, and the battery voltage at the end of each pulse application (at the end of 10 seconds) was measured. As a result of this test, a relation between the current value when a pulse in the charge side was applied and the battery voltage at the end of pulse application (at the end of 10 seconds) (a current-voltage characteristic chart in the charge side as shown in FIG. 5) was obtained. Likewise, a relation between the current value when a pulse in the discharge side was applied and the battery voltage at the end of pulse application (at the end of 10 seconds) (a current-voltage characteristic chart in the discharge side as shown in FIG. 6) was obtained.

From the current-voltage characteristic chart in the charge side, a current value at a battery voltage of 4.2 V was determined. An input value was determined from the product of these voltage value and current value.

From the current-voltage characteristic chart in the discharge side, a current value at a battery voltage of 2.5 V was determined. An output value was determined from the product of these voltage value and current value.

Table 1 shows a material mixture density in the positive electrode, a peak pore size, a pore volume per unit weight of the positive electrode active material in the positive electrode material mixture layer, and a battery output value at 25°C, with respect to Examples 1 to 20 and Reference Examples 1 to 11.

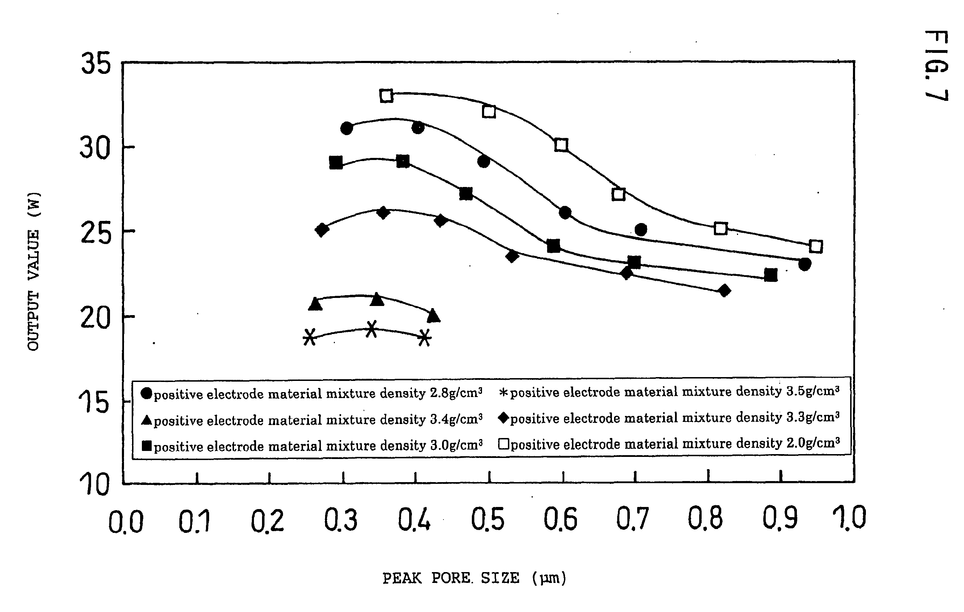

FIG. 7 shows a relation between a peak pore size and a battery output value, with respect to Examples 1 to 20 and Reference Examples 1 to 11.

**[Table 1]**

| | Material mixture density | Peak pore size | Pore volume per unit weight of active material | Output value at 25° C |
|---|---|---|---|---|
| | (g/cm³) | (µm) | (cm³/g) | (W) |
| Example 1 | 2.8 | 0.70 | 0.114 | 25 |
| Example 2 | 2.8 | 0.60 | 0.113 | 26 |
| Example 3 | 2.8 | 0.49 | 0.115 | 29 |
| Example 4 | 2.8 | 0.40 | 0.112 | 31 |
| Example 5 | 2.8 | 0.31 | 0.110 | 31 |
| Reference Example 1 | 2.8 | 0.93 | 0.114 | 23 |
| Reference Example 2 | 3.5 | 0.41 | 0.035 | 19 |
| Reference Example 3 | 3.5 | 0.34 | 0.038 | 19 |
| Reference Example 4 | 3.5 | 0.26 | 0.040 | 18 |
| Reference Example 5 | 3.4 | 0.42 | 0.044 | 20 |
| Reference Example 6 | 3.4 | 0.35 | 0.046 | 21 |
| Reference Example 7 | 3.4 | 0.26 | 0.043 | 21 |
| Example 6 | 3.3 | 0.69 | 0.054 | 23 |
| Example 7 | 3.3 | 0.53 | 0.052 | 24 |
| Example 8 | 3.3 | 0.43 | 0.051 | 26 |
| Example 9 | 3.3 | 0.36 | 0.057 | 26 |
| Example 10 | 3.3 | 0.27 | 0.050 | 25 |
| Reference Example 8 | 3.3 | 0.82 | 0.053 | 21 |
| Example 11 | 3.0 | 0.70 | 0.088 | 23 |
| Example 12 | 3.0 | 0.58 | 0.086 | 24 |
| Example 13 | 3.0 | 0.47 | 0.090 | 27 |
| Example 14 | 3.0 | 0.38 | 0.088 | 29 |
| Example 15 | 3.0 | 0.29 | 0.082 | 29 |
| Reference Example 9 | 3.0 | 0.89 | 0.092 | 22 |
| Reference Example 10 | 2.0 | 0.83 | 0.308 | 25 |
| Example 16 | 2.0 | 0.68 | 0.297 | 27 |
| Example 17 | 2.0 | 0.60 | 0.298 | 30 |
| Example 18 | 2.0 | 0.49 | 0.300 | 32 |
| Example 19 | 2.0 | 0.36 | 0.296 | 33 |
| Reference Example 11 | 2.0 | 0.95 | 0.299 | 34 |
| Example 20 | 2.8 | 0.31 | 0.113 | 32 |
| Example 21 | 2.8 | 0.27 | 0.111 | 35 |

As is evident from Table 1 and FIG. 7, when the peak pore size was 0.7 µm or less, the output was large. In Examples 6 to 10 and Examples 11 to 15, a smaller peak pore size tended to result in a lager output. In particular, when the peak pore size was 0.5 µm or less, the output was significantly increased.

In FIG. 7, the comparison among the positive electrodes having the same material mixture density (i.e., the same pore volume per unit weight of the positive electrode active material in the positive electrode material mixture layer) but having different peak pore sizes reveals that the output was gradually improved as the peak pore size became smaller. When the peak pore size was 0.7 µm or less, and further 0.5 µm or less, the output tended to improve significantly. This was presumably because the supply channels for supplying ions from the non-aqueous electrolyte in the separator to the positive electrode active material were established in an optimal state in the positive electrode.

In the case where pores having a pore size of 0.7 µm or less are present evenly in the vicinity of the active material, the channels for supplying ions from the non-aqueous electrolyte in the separator to the active material are present throughout in the vicinity thereof. Therefore, a necessary amount of ions for charge/discharge reaction are supplied smoothly and evenly to the active material. It is considered that this allows the charge/discharge reaction to proceed favorably, and thus the non-aqueous electrolyte secondary battery exhibits favorable battery characteristics.

Even when the peak pore size was 0.7 µm or less, in the case where the pore volume per unit weight of the positive electrode active material in the positive electrode material mixture layer was less than 0.05 cm³/g, the battery output characteristics were low, as in Reference Examples 2 to 7. On the other hand, as in Examples 16 to 19, the pore volume was 0.05 to 0.3 cm³/g, and further 0.05 to 0.25 cm³/g, favorable output characteristics were obtained as above.

The cumulative pore volume is considered to have a correlation with the amount of ion supply channels. A smaller cumulative pore volume results in a shortage of ions, failing to supply a necessary amount of ions for charge/discharge reaction to the active material. For this reason, a pore volume of a certain level or more is considered necessary. From the results of Table 1, it is considered necessary that the pore volume per unit weight of the positive electrode active material in the positive electrode material mixture layer is 0.05 cm³/g or more.

In the case where positive electrode active materials having different mean particle sizes were mixed as in Examples 20 to 21, it was possible to control the peak pore size in the positive electrode material mixture layer and the pore volume per unit weight of the positive electrode active material in the positive electrode material mixture layer. All of the batteries of Examples 20 to 21 exhibited favorable output characteristics.
It should be noted that output values are only shown in Table 1 because the difference between the output values in Examples 1 to 20 and the output values in Reference Examples 1 to 11 was great. This is presumably because that especially the ion migration in the positive electrode is considered to be a predominant factor in a pulse output for a short period of time.

### Example 22

A battery was fabricated in the same manner as in Example 1 except that, for the negative electrode active material, a mixture obtained by mixing negative electrode active material C (artificial graphite) having a mean particle size (D₅₀) of 15 µm and a BET specific surface area of 3.2 m²/g and negative electrode active material D (artificial graphite) having a mean particle size (D₅₀) of 5 µm and a BET specific surface area of 9.6 m²/g in a weight ratio of (positive electrode active material C):(positive electrode active material D) = 75:25 was used.

### «Reference Example 12»

A battery was fabricated in the same manner as in Example 1 except that, in the process of preparation of a negative electrode material mixture paste, the paste kneading time with a planetary mixer was set to 60 minutes.

### «Reference Example 13»

A battery was fabricated in the same manner as in Example 1 except that, in the process of preparation of a negative electrode material mixture paste, the paste kneading time with a planetary mixer was set to 30 minutes.

### Example 23

A battery was fabricated in the same manner as in Example 1 except that the negative electrode material mixture was rolled such that the density of the negative electrode material mixture became 1.5 g/cm³, whereby a negative electrode material mixture layer having a thickness of 29 µm was formed on both faces of the negative electrode current collector.

### Example 24

A battery was fabricated in the same manner as in Example 22 except that the negative electrode material mixture was rolled such that the density of the negative electrode material mixture became 1.5 g/cm³, whereby a negative electrode material mixture layer having a thickness of 29 µm was formed on both faces of the negative electrode current collector.

### «Reference Example 14»

A battery was fabricated in the same manner as in Reference Example 12 except that the negative electrode material mixture was rolled such that the density of the negative electrode material mixture became 1.5 g/cm³, whereby a negative electrode material mixture layer having a thickness of 29 µm was formed on both faces of the negative electrode current collector.

### «Reference Example 15»

A battery was fabricated in the same manner as in Reference Example 13 except that the negative electrode material mixture was rolled such that the density of the negative electrode material mixture became 1.5 g/cm³, whereby a negative electrode material mixture layer having a thickness of 29 µm was formed on both faces of the negative electrode current collector.

### «Reference Example 16»

A battery was fabricated in the same manner as in Example 22 except that the negative electrode material mixture was rolled such that the density of the negative electrode material mixture became 1.6 g/cm³, whereby a negative electrode material mixture layer having a thickness of 27 µm was formed on both faces of the negative electrode current collector.

### «Reference Example 17»

A battery was fabricated in the same manner as in Reference Example 12 except that the negative electrode material mixture was rolled such that the density of the negative electrode material mixture became 1.6 g/cm³, whereby a negative electrode material mixture layer having a thickness of 27 µm was formed on both faces of the negative electrode current collector.

Table 2 shows a peak pore size, a pore volume per unit weight of the negative electrode active material, and a battery input value, with respect to Examples 22 to 24 and Reference Examples 12 to 17.

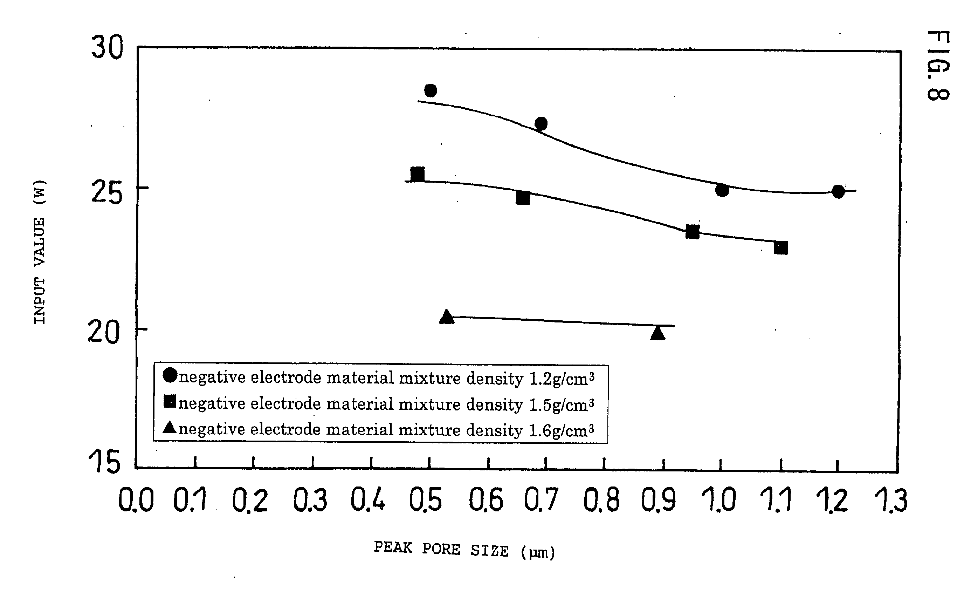

FIG. 8 shows a relation between a peak pore size and a battery input value, with respect to Examples 22 to 24 and Reference Examples 12 to 17.

**[Table 2]**

| | Material mixture density | Peak pore size | Pore volume per unit weight of active material | Input value at 25°C |
|---|---|---|---|---|
| | (g/cm³) | (µm) | (cm³/g) | (W) |
| Example 1 | 1.2 | 0.69 | 0.400 | 27 |
| Example 22 | 1.2 | 0.5 | 0.398 | 29 |
| Reference Example 12 | 1.2 | 1.00 | 0.402 | 25 |
| Reference Example 13 | 1.2 | 1.20 | 0.403 | 25 |
| Example 23 | 1.5 | 0.66 | 0.210 | 25 |
| Example 24 | 1.5 | 0.48 | 0.208 | 26 |
| Reference Example 14 | 1.5 | 0.95 | 0.215 | 24 |
| Reference Example 15 | 1.5 | 1.10 | 0.207 | 23 |
| Reference Example 16 | 1.6 | 0.53 | 0.172 | 21 |
| Reference Example 17 | 1.6 | 0.89 | 0.167 | 20 |

As is evident from Table 2 and FIG. 8, as in the case of the positive electrode, when the peak pore size was 0.7 µm or less, and further 0.5 µm or less, a large input value was obtained. However, as in Reference Examples 16 to 17, in the case where the pore volume per unit weight of the negative electrode active material in the negative electrode material mixture layer was less than 0.2 cm³/g, even when the peak pore size was 0.7 µm or less, the input values were low.

These results were obtained presumably because that, as in the case of the positive electrode, by virtue of pores having a pore size of 0.7 µm or less that were present evenly in the vicinity of the active material, the channels for supplying ions from the non-aqueous electrolyte in the separator to the active material were present throughout the vicinity thereof. Therefore, a necessary amount of ions for charge/discharge reaction were supplied smoothly and evenly to the active material. This made it possible for the charge/discharge reaction to proceed favorably, allowing the non-aqueous electrolyte secondary battery to exhibit favorable battery characteristics.

In FIG. 8, the comparison among the negative electrodes having the same material mixture density (i.e., the same pore volume per unit weight of the negative electrode active material in the negative electrode material mixture layer) but having different peak pore sizes reveals that the output was gradually improved as the peak pore size became smaller. When the peak pore size was 0.7 µm or less, and further 0.5 µm or less, the input tended to improve significantly. This was presumably because the channels for supplying ions from the non-aqueous electrolyte in the separator to the negative electrode active material were established in an optimal state in the negative electrode.

As in the case of the positive electrode, the cumulative pore volume is considered to have a correlation with the amount of ion supply channels. A smaller cumulative pore volume results in a shortage of ions, failing to supply a necessary amount of ions for charge/discharge reaction to the active material. For this reason, a pore volume of a certain level or more is considered necessary. From the results of Table 2, it is considered necessary that the pore volume per unit weight of the negative electrode active material in the negative electrode material mixture layer is 0.2 cm³/g or more. Moreover, from Table 2, it is found that the pore volume per unit weight of the negative electrode active material in the negative electrode material mixture layer within a range up to 0.4 cm³/g results in favorable battery characteristics.

### Industrial Applicability

The present invention is suitably applicable to a non-aqueous electrolyte secondary battery required to have high output/input characteristics. For example, in Examples 1 to 24 in the present invention, if the size of the positive electrode or the negative electrode is changed, the design capacity can be changed, for example, to 2 Ah or more. Such a battery can be expected to have high output/input characteristics, and thus applicable as a power source for mobile units, such as strong hybrid or mild hybrid automobiles driven by powers of both an internal-combustion engine or a fuel cell and an electric motor (a motor etc.), electric automobiles, and motorbikes. Such a battery is also suitable for use as an auxiliary power source for driving a hybrid automobile, and capable of driving various devices in a vehicle, power-assisting the engine at the time of starting, driving-off and accelerating the vehicle, and in addition, regenerative energy is efficiently input to the battery during deceleration of the vehicle. Further, the battery of the present invention is suitable for use as a power source for electric power tools and a power source for stationary equipment such as an elevator, and capable of driving and power-assisting these tools and equipment, and in addition, regenerative energy is efficiently input to the battery.

## Claims

1. A positive electrode for a non-aqueous electrolyte secondary battery comprising a positive electrode current collector, and a positive electrode material mixture layer carried thereon, wherein
said positive electrode material mixture layer includes a positive electrode active material, and said positive electrode active material includes a lithium-containing composite oxide, said lithium-containing composite oxide being represented by the general formula: LiNiₓM₁₋ₓO₂, where 0 < x < 1, and M is at least one selected from the group consisting of Co, Mn, Al, Mg and Li;
a peak pore size in said positive electrode material mixture layer is 0.5 µm or less; and
a pore volume in said positive electrode material mixture layer is 0.05 cm³/g or more and 0.3 cm³/g or less per unit weight of said positive electrode active material.

2. A non-aqueous electrolyte secondary battery comprising the positive electrode for a non-aqueous electrolyte secondary battery in accordance with claim 1, a negative electrode, and a non-aqueous electrolyte.

3. A negative electrode for a non-aqueous electrolyte secondary battery comprising a negative electrode current collector, and a negative electrode material mixture layer carried thereon, wherein
said negative electrode material mixture layer includes a negative electrode active material, and said negative electrode active material includes a carbon material, said carbon material being graphite;
a peak pore size in said negative electrode material mixture layer is 0.7 µm or less; and
a pore volume in said negative electrode material mixture layer is 0.2 cm³/g or more and 0.4 cm³/g or less per unit weight of said negative electrode active material.

4. The negative electrode for a non-aqueous electrolyte secondary battery in accordance with claim 3, wherein said peak pore size is 0.5 µm or less.

5. A non-aqueous electrolyte secondary battery comprising a positive electrode, the negative electrode for a non-aqueous electrolyte secondary battery in accordance with claim 3, and a non-aqueous electrolyte.

6. An electric automobile or a hybrid automobile comprising a vehicle, and a non-aqueous electrolyte secondary battery for driving said vehicle, wherein said non-aqueous electrolyte secondary battery comprises the positive electrode for a non-aqueous electrolyte secondary battery in accordance with claim 1, a negative electrode, and a non-aqueous electrolyte.

7. An electric automobile or a hybrid automobile comprising a vehicle, and a non-aqueous electrolyte secondary battery for driving said vehicle, wherein said non-aqueous electrolyte secondary battery comprises a positive electrode, the negative electrode for a non-aqueous electrolyte secondary battery in accordance with claim 3, and a non-aqueous electrolyte.

8. An electric power tool or stationary equipment comprising apparatus, and a non-aqueous electrolyte secondary battery for driving said apparatus, wherein said non-aqueous electrolyte secondary battery comprises the positive electrode for a non-aqueous electrolyte secondary battery in accordance with claim 1, a negative electrode, and a non-aqueous electrolyte.

9. An electric power tool or stationary equipment comprising apparatus, and a non-aqueous electrolyte secondary battery for driving said apparatus, wherein said non-aqueous electrolyte secondary battery comprises a positive electrode, the negative electrode for a non-aqueous electrolyte secondary battery in accordance with claim 3, and a non-aqueous electrolyte.

10. The electric automobile or the hybrid automobile in accordance with claim 6, wherein said negative electrode is the negative electrode for a non-aqueous electrolyte secondary battery in accordance with claim 3.

11. The electric power tool or stationary equipment in accordance with claim 8, wherein said negative electrode is the negative electrode for a non-aqueous electrolyte secondary battery in accordance with claim 3.

## Patentansprüche

1. Positivelektrode für eine Sekundärbatterie mit nichtwässrigem Elektrolyt, die einen Positivelektrodenstromabnehmer und eine darauf geträgerte Positivelektrodenmaterialmischungsschicht umfasst, wobei
die Positivelektrodenmaterialmischungsschicht ein Positivelektrodenaktivmaterial beinhaltet, und das Positivelektrodenaktivmaterial ein Lithium enthaltendes Kompositoxid beinhaltet, das Lithium enthaltende Kompositoxid durch die allgemeine Formel dargestellt ist: LiNiₓM₁₋ₓO₂, wobei 0 < x < 1, und M zumindest eines ist ausgewählt aus der Gruppe bestehend aus Co, Mn, Al, Mg und Li;
eine Peakporengröße in der Positivelektrodenmaterialmischungsschicht 0,5 µm oder weniger ist; und
ein Porenvolumen in der Positivelektrodenmaterialmischungsschicht 0,05 cm³/g oder mehr und 0,3 cm³/g oder weniger pro Gewichtseinheit des Positivelektrodenaktivmaterials ist.

2. Sekundärbatterie mit nichtwässrigem Elektrolyt, die die Positivelektrode für eine Sekundärbatterie mit nichtwässrigem Elektrolyt nach Anspruch 1, eine Negativelektrode und einen nichtwässrigen Elektrolyt umfasst.

3. Negativelektrode für eine Sekundärbatterie mit nichtwässrigem Elektrolyt, die einen Negativelektrodenstromabnehmer und eine darauf geträgerte Negativelektrodenmaterialmischungsschicht umfasst, wobei
die Negativelektrodenmaterialmischungsschicht ein Negativelektrodenaktivmaterial beinhaltet, und das Negativelektrodenaktivmaterial ein Kohlenstoffmaterial beinhaltet, das Kohlenstoffmaterial Graphit ist;
eine Peakporengröße in der Negativelektrodenmaterialmischungsschicht 0,7 µm oder weniger ist; und
ein Porenvolumen in der Negativelektrodenmaterialmischungsschicht 0,2 cm³/g oder mehr und 0,4 cm³/g oder weniger pro Gewichtseinheit des Negativelektrodenaktivmaterials ist.

4. Negativelektrode für eine Sekundärbatterie mit nichtwässrigem Elektrolyt nach Anspruch 3, wobei die Peakporengröße 0,5 µm oder weniger ist.

5. Sekundärbatterie mit nichtwässrigem Elektrolyt, die eine Positivelektrode, die Negativelektrode für eine Sekundärbatterie mit nichtwässrigem Elektrolyt nach Anspruch 3 und einen nichtwässrigen Elektrolyt umfasst.

6. Elektrisches Automobil oder ein Hybridautomobil, umfassend ein Fahrzeug und eine Sekundärbatterie mit nichtwässrigem Elektrolyt zum Steuern des Fahrzeugs, wobei die Sekundärbatterie mit nichtwässrigem Elektrolyt die Positivelektrode für eine Sekundärbatterie mit nichtwässrigem Elektrolyt nach Anspruch 1, eine Negativelektrode und einen nichtwässrigen Elektrolyt umfasst.

7. Elektrisches Automobil oder ein Hybridautomobil, umfassend ein Fahrzeug und eine Sekundärbatterie mit nichtwässrigem Elektrolyt zum Steuern des Fahrzeugs, wobei die Sekundärbatterie mit nichtwässrigem Elektrolyt eine Positivelektrode, die Negativelektrode für eine Sekundärbatterie mit nichtwässrigem Elektrolyt nach Anspruch 3 und einen nichtwässrigen Elektrolyt umfasst.

8. Elektrowerkzeug oder stationäre Gerätschaft, umfassend eine Vorrichtung und eine Sekundärbatterie mit nichtwässrigem Elektrolyt zum Steuern der Vorrichtung, wobei die Sekundärbatterie mit nichtwässrigem Elektrolyt die Positivelektrode für eine Sekundärbatterie mit nichtwässrigem Elektrolyt nach Anspruch 1, eine Negativelektrode und einen nichtwässrigen Elektrolyt umfasst.

9. Elektrowerkzeug oder stationäre Gerätschaft, umfassend eine Vorrichtung und eine Sekundärbatterie mit nichtwässrigem Elektrolyt zum Steuern der Vorrichtung, wobei die Sekundärbatterie mit nichtwässrigem Elektrolyt eine Positivelektrode, die Negativelektrode für eine Sekundärbatterie mit nichtwässrigem Elektrolyt nach Anspruch 3 und einen nichtwässrigen Elektrolyt umfasst.

10. Elektrisches Automobil oder Hybridautomobil nach Anspruch 6, wobei die Negativelektrode die Negativelektrode für eine Sekundärbatterie mit nichtwässrigem Elektrolyt nach Anspruch 3 ist.

11. Elektrowerkzeug oder stationäre Gerätschaft nach Anspruch 8, wobei die Negativelektrode die Negativelektrode für eine Sekundärbatterie mit nichtwässrigem Elektrolyt nach Anspruch 3 ist.

## Revendications

1. Electrode positive pour une batterie secondaire à électrolyte non aqueux comprenant un collecteur de courant à électrode positive, et une couche de mélange de matériaux d'électrode positive supportée par-dessus, dans laquelle
ladite couche de mélange de matériaux d'électrode positive comprend un matériau actif d'électrode positive, et ledit matériau actif d'électrode positive comprend un oxyde composite contenant du lithium, ledit oxyde composite contenant du lithium étant représenté par la formule générale : LiNiₓM₁₋ₓO₂, dans laquelle 0 < x < 1, et M est au moins l'un choisi dans le groupe consistant en Co, Mn, Al, Mg, et Li,
un taille de pore pic dans ladite couche de mélange de matériaux d'électrode positive est de 0,5 µm ou moins ; et
un volume de pore dans ladite couche de mélange de matériaux d'électrode positive est de 0,05 cm³/g ou plus et 0,3 cm³/g ou moins par unité de poids dudit matériau actif d'électrode positive.

2. Batterie secondaire à électrolyte non aqueux comprenant l'électrode positive pour une batterie secondaire à électrolyte non aqueux selon la revendication 1, une électrode négative, et un électrolyte non aqueux.

3. Electrode négative pour une batterie secondaire à électrolyte non aqueux comprenant un collecteur de courant à électrode négative, et une couche de mélange de matériaux d'électrode négative supportée par-dessus, dans laquelle
ladite couche de mélange de matériaux d'électrode négative comprend un matériau actif d'électrode négative, et ledit matériau actif d'électrode négative comprend un matériau carboné, ledit matériau carboné étant du graphite ;
un taille de pore pic dans ladite couche de mélange de matériaux d'électrode négative est de 0,7 µm ou moins ; et
un volume de pore dans ladite couche de mélange de matériaux d'électrode négative est de 0,2 cm³/g ou plus et 0,4 cm³/g ou moins par unité de poids dudit matériau actif d'électrode négative.

4. Electrode négative pour une batterie secondaire à électrolyte non aqueux selon la revendication 3, dans laquelle la taille de pore pic est de 0,5 µm ou moins.

5. Batterie secondaire à électrolyte non aqueux comprenant une électrode positive, l'électrode négative pour une batterie secondaire à électrolyte non aqueux selon la revendication 3 et un électrolyte non aqueux.

6. Automobile électrique ou automobile hybride comprenant un véhicule, et une batterie secondaire à électrolyte non aqueux pour entraîner ledit véhicule, dans lequel ladite batterie secondaire à électrolyte non aqueux comprend l'électrode positive pour une batterie secondaire à électrolyte non aqueux selon la revendication 1, une électrode négative, et un électrolyte non aqueux.

7. Automobile électrique ou automobile hybride comprenant un véhicule, et une batterie secondaire à électrolyte non aqueux pour entraîner ledit véhicule, dans lequel ladite batterie secondaire à électrolyte non aqueux comprend une électrode positive, l'électrode négative pour une batterie secondaire à électrolyte non aqueux selon la revendication 3 et un électrolyte non aqueux.

8. Outil à puissance électrique ou un équipement stationnaire comprenant un appareil, et une batterie secondaire à électrolyte non aqueux pour entraîner ledit appareil, dans lequel ladite batterie secondaire à électrolyte non aqueux comprend l'électrode positive pour une batterie secondaire à électrolyte non aqueux selon la revendication 1, une électrode négative, et un électrolyte non aqueux.

9. Outil à puissance électrique ou un équipement stationnaire comprenant un appareil, et une batterie secondaire à électrolyte non aqueux pour entraîner ledit appareil, dans lequel ladite batterie secondaire à électrolyte non aqueux comprend une électrode positive, l'électrode négative pour une batterie secondaire à électrolyte non aqueux selon la revendication 3 et un électrolyte non aqueux.

10. Automobile électrique ou automobile hybride selon la revendication 6, dans lequel ladite électrode négative est l'électrode négative pour une batterie secondaire à électrolyte non aqueux selon la revendication 3.

11. Outil à puissance électrique ou un équipement stationnaire selon la revendication 8, dans lequel ladite électrode négative est l'électrode négative pour une batterie secondaire à électrolyte non aqueux selon la revendication 3.
